# EUROPÄISCHE PATENTSCHRIFT

(11) **EP 0 437 683 B1**
(45) Veröffentlichungstag und Bekanntmachung des Hinweises auf die Patenterteilung: **15.12.1993**
(21) Anmeldenummer: 90120043.6
(22) Anmeldetag: 19.10.1990
(51) Int. Cl.: F01M 11/00, F16J 15/12

(54) **Brennkraftmaschine mit einem Ölabweisteil**
Combustion engine with an oil separator plate
Moteur à combustion avec séparateur d'huile

(30) Priorität: 19.01.1990 DE 4001470
(43) Veröffentlichungstag der Anmeldung: 24.07.1991
(73) Patentinhaber: Dr.Ing.h.c. F. Porsche Aktiengesellschaft, 70435 Stuttgart (DE)
(72) Erfinder: Langlois, Karl, Dipl.-Ing., W-7251 Weissach-Flacht (DE)

(56) Entgegenhaltungen:
- EP-A- 0 148 484
- FR-A- 1 477 460
- GB-A- 852 413
- US-A- 4 625 979
- ATZ-AUTOMOBILTECHNISCHE ZEITSCHRIFT vol. 89, no. 2, Februar 1987, STUTTGART DE; LOHR: "OPEL Omega - Teil 2: Fahrwerk und Antrieb"
- PATENT ABSTRACTS OF JAPAN vol. 7, no. 187 (M-236)(1332) 16 August 1983, & JP-A-58 88416 (YAMAHA HATSUDOKI K.K) 26 Mai 1983

## Beschreibung

Die Erfindung betrifft eine Brennkraftmaschine gemäß dem Oberbegriff des Anspruches 1.

Aus der Automobiltechnischen Zeitschrift ATZ 89, 1987, Nr.2, S.69 ist ein als sogenannter Ölhobel ausgebildetes Ölabweisteil bekannt. Dieser Ölhobel weist an seiner äußeren Berandung einen umlaufenden Flansch auf und ist mit diesem zwischen Zylinderblock und Ölwanne der Brennkraftmaschine angeordnet. Nachteilig bei dieser Ausführung ist die Tatsache, daß der Ölhobel ein separates Bauteil darstellt, welches vor der Montage der Ölwanne an den Zylinderblock zusätzlich zu einer üblichen Dichtung montiert werden muß, die einen Ölaustritt aus der Trennfuge von Ölwanne und Zylinderblock verhindert und daß eine zweite Dichtung erforderlich ist, die die Trennfuge zwischen Ölhobel und Ölwanne bzw. zwischen Ölhobel und Zylinderblock abdichtet.

Aufgabe der vorliegenden Erfindung ist es, ein verbessertes Ölabweisteil für eine Brennkraftmaschine zu schaffen, welches den zuvor genannten Aufwand vermeidet und eine einfache, kostensparende Montage gewährleistet.

Die Lösung der Aufgabe gelingt durch die kennzeichnenden Merkmale des Anspruches 1. Weitere vorteilhafte Merkmale beinhalten die Unteransprüche.

Der hauptsächliche Vorteil der Erfindung ist darin zu sehen, daß ein Bauteil bei der Montage der Ölwanne an den Zylinderblock entfällt, da das Ölabweisteil durch die integrierten Abdichtmittel gleichzeitig als Dichtung wirkt. Mit der Montage des Ölabweisteils ist somit gleichzeitig eine Abdichtung der Dichtflächen zwischen Ölabweisteil und Ölwanne einerseits sowie Ölabweisteil und Kurbelgehäuse andererseits gewährleistet. Die Abdichtung erfolgt mittels einer in die um das Ölabweisteil umlaufende, flanschförmige Berandung eingesetzte Dichtung, die beiderseits der Berandung wirkt. Die Montage erfordert somit weniger Bauteile und weniger Zeit.

Ausführungsbeispiele der Erfindung werden anhand der nachfolgend aufgeführten Figuren erläutert.

Es zeigen:

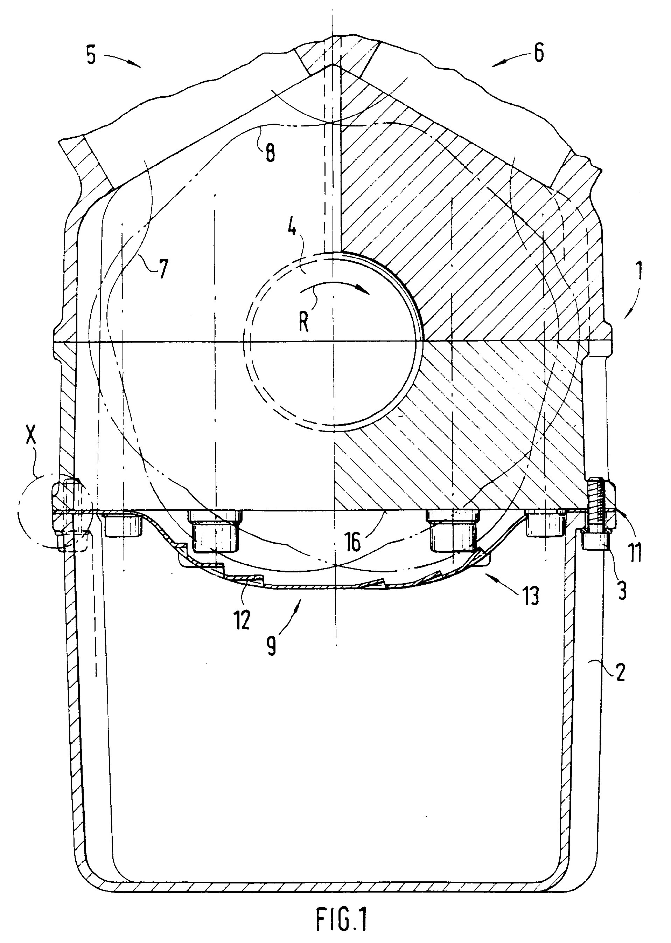

- Fig. 1: einen Querschnitt durch ein Kurbelgehäuse mit über Abdichtmittel verbundener Ölwanne einer Brennkraftmaschine,
- Fig. 2: eine vergrößerte Einzelheit X aus Fig. 1 nach einer ersten Ausführung,
- Fig. 3: eine vergrößerte Einzelheit X aus Fig. 1 einer zweiten Ausführung,

Am Kurbelgehäuse 1 einer Brennkraftmaschine ist eine Ölwanne 2 mittels Schrauben 3 befestigt. Eine Kurbelwelle 4 ist im Kurbelgehäuse 1 gelagert und weist eine durch den Pfeil R dargestellte Drehrichtung auf. Die Brennkraftmaschine weist weiterhin zwei V-förmig zueinander angeordnete Zylinderreihen 5, 6 auf, deren nicht näher gezeigte Zylinder Kolben aufnehmen, die durch Pleuel mit der Kurbelwelle 4 verbunden sind. Die Herzkurven 7, 8 geben die Umhüllenden der mit der Kurbelwelle 4 umlaufenden Pleuel wieder.
Dicht unterhalb der Herzkurven 7, 8 verlaufend ist ein Ölabweisteil 9 angeordnet. Die äußere Berandung 10 des Ölabweisteils 9 ist flanschförmig ausgebildet und im eingebauten Zustand des Ölabweisteils 9 in der Trennfuge 11 zwischen Ölwanne 2 und Kurbelgehäuse 1 mit Hilfe der Schrauben 3 verspannt.
In den Bereichen geringsten Abstandes zwischen dem Ölabweisteil 9 und den Herzkurven 7, 8 sind Ausklinkungen 12 im wannenförmigen Bereich 13 des Ölabweisteils 9 angeordnet, die das von dem Kurbeltrieb abgeschleuderte Schmieröl auffangen und durch das Ölabweisteil 9 hindurch in die Ölwanne 2 leiten.

Auf der Berandung 10 ist eine umlaufende Dichtung 14 angeordnet, die sowohl die in der Trennfuge 11 liegende Dichtfläche zwischen der Oberseite 15 des Ölabweisteils 9 und der unteren Abschlußfläche 16 des Kurbelgehäuses 1 als auch die Dichtfläche zwischen der Unterseite 17 des Ölabweisteils 9 und der Oberseite der Ölwanne 2 gegen Ölaustritt sichert.

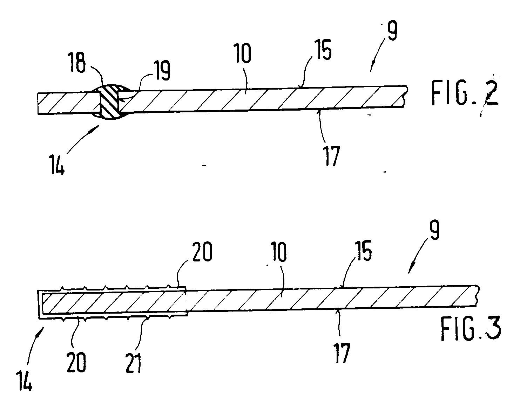

Wie aus den Figuren 2 und 3 ersichtlich, kann die Dichtung 14 verschiedenartig ausgebildet sein. Figur 2 zeigt eine Dichtung 14, die in Form von einem als Raupen 18 aufgebrachten Elastomer auf der Oberseite 15 und der Unterseite 17 der Berandung 10 verläuft. Hierbei können mehrere Dichtungen 14 parallel zueinander angeordnet sein, um die Dichtwirkung zu erhöhen.
Die Raupen 18 sind über mehrere entlang des Umfanges der Berandung 10 angeordnete Durchbrüche 19 untereinander verbunden.
In Figur 3 ist die Dichtung 14 als im Querschnitt U-förmiges, von außen auf die Berandung 10 gestecktes Teil ausgebildet. An den auf der Oberseite 15 bzw. der Unterseite 17 eng anliegenden Schenkeln 20 dieser Dichtung 14 sind mehrere, nach außen weisende Dichtlippen 21 angeordnet.

Das Ölabweisteil 9 ist in beliebigen Ausgestaltungen als Tiefziehteil aus Metall mit den Ausklingungen 12 herstellbar. Die für ein Ölabweisteil benötigte Wandstärke von ca. 0,7 bis 1,2 mm entspricht der Dicke von üblicherweise verwendeten separaten Dichtungen, so daß sich die gesamte Bauhöhe der Brennkraftmaschine nicht ändert.
Gegebenenfalls kann das Ölabweisteil 9 aus Kunststoff bestehen, wobei bevorzugt eine Dichtung 14 gemäß Figur 3 verwendet wird. Dabei kann es als Spritzteil oder aus einem mit Füllstoffen, z.B. Glasfaser oder Kohlefaser, versehenen Kunststoff hergestellt werden.

## Patentansprüche

1. Brennkraftmaschine mit einem schalenförmigen Ölabweisteil, welches in einer an einer Ölwanne grenzenden Trennfuge befestigt und mit einer an seinem äußeren Umfang verlaufenden, flanschförmigen Berandung versehen ist, wobei in der Trennfuge Abdichtmittel vorgesehen sind, die aus in der Berandung (10) integrierten Dichtungen (14) bestehen, welche zwischen einer unteren Abschlußfläche (16) eines Kurbelgehäuses (1) und der Oberseite (15) des Ölabweisteils (9) sowie zwischen der Unterseite (17) des Ölabweisteils (9) und der Ölwanne (2) angeordnet sind, dadurch gekennzeichnet, daß die Dichtungen (14) auf der Oberseite des Ölabweisteils und auf der Unterseite des Ölabweisteils zumindest abschnittsweise entlang der Berandung (10) miteinander verbunden sind.

2. Brennkraftmaschine nach Anspruch 1, dadurch gekennzeichnet, daß die Dichtung (14) mehrteilig ausgebildet ist und in Form von Raupen (18) entlang der Berandung (10) verlaufend auf der Oberseite (15) und der Unterseite (17) angeordnet ist, wobei in der Berandung (10) mehrere Durchbrüche (19) angeordnet sind, in denen gegenüberliegende Raupen (18) miteinander verbunden sind.

3. Brennkraftmaschine nach Anpruch 1, dadurch gekennzeichnet, daß die Dichtung (14) U-förmig ausgebildet ist und mit ihren parallelen Schenkeln (20) auf der Oberseite (15) und der Unterseite (17) der Berandung (10) eng aufliegt.

4. Brennkraftmaschine nach Anspruch 3, dadurch gekennzeichnet, daß auf den Schenkeln (20) mehrere parallel verlaufende Dichtlippen (21) angeordnet sind.

5. Brennkraftmaschine nach einem oder mehreren der vorhergehenden Ansprüche, dadurch gekennzeichnet, daß das Ölabweisteil (9) als metallisches Tiefziehteil ausgebildet ist und daß in einem von der Berandung (10) umschlossenen, wannenförmigen Bereich (13) Ausklinkungen (12) angeordnet sind.

6. Brennkraftmaschine nach einem oder mehreren der vorhergehenden Ansprüche, dadurch gekennzeichnet, daß das Ölabweisteil (9) als Spritzteil aus Kunststoff ausgebildet ist.

7. Brennkraftmaschine nach einem oder mehreren der vorhergehenden Ansprüche, dadurch gekennzeichnet, daß das Ölabweisteil (9) als ein mit Füllstoffen versehenes Kunststoffteil ausgebildet ist.

8. Brennkraftmaschine nach einem oder mehreren der vorhergehenden Ansprüche, dadurch gekennzeichnet, daß die Dichtung (14) aus einem Elastomer besteht.

## Claims

1. An internal-combustion engine with a shell-shaped oil-separator part, which is secured in a separation joint bounding an oil sump and is provided with a flange-shaped edging extending on the outer periphery thereof, wherein sealing means comprising seals (14) integrated in the edging (1) are provided in the separation joint, the seals (14) being arranged between a lower end face (16) of a crankcase (1) and the top (15) of the oil-separator part (9) as well as between the underside (17) of the oil-separator part (9) and the oil sump (2), **characterized in that** the seals (14) on the top of the oil-separator part and on the underside of the oil-separator part are joined together at least in part along the edging (10).

2. An internal-combustion engine according to Claim 1, **characterized in that** the seal (14) is made in a plurality of parts and is arranged extending in the form of beads (18) along the edging (1) on the top (15) and the underside (17), a plurality of perforations (19) in which opposite beads (18) are joined together being provided in the edging (10).

3. An internal-combustion engine according to Claim 1, **characterized in that** the seal (14) is made U-shaped and rests with its parallel arms (20) closely on the top (15) and the underside (17) of the edging (10).

4. An internal-combustion engine according to Claim 3, **characterized in that** a plurality of sealing lips (21) extending parallel are provided on the arms (20).

5. An internal-combustion engine according to one or more of the preceding Claims, **characterized in that** the oil-separator part (9) is constructed as a metallic deep-drawn part, and punched-out steps (12) are provided in the bowl-shaped area (13) surrounded by the edging (10).

6. An internal-combustion engine according to one or more of the preceding Claims, **characterized in that** the oil-separator part (9) is constructed as an injection-moulded part from plastics material.

7. An internal-combustion engine according to one or more of the preceding Claims, **characterized in that** the oil-separator part (9) is constructed as a plastics part provided with fillers.

8. An internal-combustion engine according to one or more of the preceding Claims, **characterized in that** the sealing (14) consists of an elastomer.

## Revendications

1. Moteur à combustion interne équipé d'un séparateur d'huile, fixé dans un joint de séparation délimitant un carter à huile et pourvu d'une bordure en forme de bride, s'étendant sur la périphérie extérieure, des moyens d'étanchéité, composés de joints d'étanchéité (14) intégrés dans la bordure (10), étant prévus dans le joint de séparation et disposés entre une face de délimitation inférieure (16) d'un carter de vilebrequin (1) et la face supérieure (15) du séparateur (9), ainsi qu'entre la face inférieure (17) du séparateur (9) et le carter d'huile (2), et caractérisé en ce que les joints d'étanchéité (14) disposés sur la face supérieure du séparateur et sur la face inférieure du séparateur sont reliés ensemble, au moins par sections, le long de la bordure (10).

2. Moteur à combustion interne selon la revendication 1, caractérisé en ce que le joint d'étanchéité (14) est réalisé en plusieurs parties et se présente sous forme de chenilles (18), s'étendant le long de la bordure (10), sur la face supérieure (15) et sur la face inférieure (17), plusieurs passages (19), dans lesquels des chenilles (18) se faisant face sont reliées ensemble, étant agencés dans la bordure (10).

3. Moteur à combustion interne selon la revendication 1 ou 2, caractérisé en ce que le joint d'étanchéité (14) est en forme de U et appuie étroitement, par ses branches parallèles (20), sur la face supérieure (15) et la face inférieure (17) de la bordure (10).

4. Moteur à combustion interne selon la revendication 3, caractérisé en ce que plusieurs lèves d'étanchéité (21) parallèles sont disposées sur les branches (20).

5. Moteur à combustion interne selon l'une ou plusieurs des revendications précédentes, caractérisé en ce que le séparateur (9) est réalisé sous forme de pièce métallique obtenue par étirage profond et en ce que des ouïes (12) sont agencées dans une zone (13) en forme de carter, entourée par la bordure (10).

6. Moteur à combustion interne selon l'une ou plusieurs des revendications précédentes, caractérisé en ce que le séparateur (9) est une pièce obtenue par injection de matière synthétique.

7. Moteur à combustion interne selon l'une ou plusieurs des revendications précédentes, caractérisé en ce que le séparateur (9) est une pièce en matière synthétique pourvue de substances de charges.

8. Moteur à combustion interne selon l'une ou plusieurs des revendications précédentes, caractérisé en ce que le joint d'étanchéité (14) est réalisé en élastomère.
